# EUROPEAN PATENT SPECIFICATION

(11) **EP 1 480 394 B1**
(45) Date of publication and mention of the grant of the patent: **18.04.2007**
(21) Application number: 04010563.7
(22) Date of filing: 04.05.2004
(51) Int. Cl.: H04L 12/56

(54) **Wireless communication device, short-range radio system, and method for controlling searches in a short-range radio system**
Mobiles Kommunikationsgerät, Kurzstreckenfunksystem und Verfahren zur Steuerung von Suchabfragen in einem Kurzstreckenfunksystem
Dispositif de communication sans fil, système radio à courtes distances et procédé pour contrôler des recherches dans un système radio à courtes distances

(30) Priority: 13.05.2003 JP 2003134713
(43) Date of publication of application: 24.11.2004
(60) Divisional application: 06018534.5
(73) Proprietor: KABUSHIKI KAISHA TOSHIBA, Tokyo (JP)
(72) Inventor: Tsukui, Yasuhiro, Minato-ku Tokyo (JP)
(74) Representative: HOFFMANN EITLE

(56) References cited:
- EP-A- 1 209 877
- WO-A-02/39484
- US-A1- 2002 065 778
- US-A1- 2003 037 033
- "SPECIFICATION OF THE BLUETOOTH SYSTEM, PROFILES, VERSION 1.0 B, SERVICE DISCOVERY APPLICATION PROFILE" BLUETOOTH STANDARD, 1 December 1999 (1999-12-01), XP002176976
- "Specification of the Bluetooth Sytem, Part E, Service Discovery Protocol (SDP)" BLUETOOTH STANDARD, 1 December 1999 (1999-12-01), XP002245657

## Description

### BACKGROUND OF THE INVENTION

### FIELD OF THE INVENTION

The present invention relates to a wireless communication device having a short-range radio capability, a short-range radio system and a method for controlling searches in a short-range radio system.

### DESCRIPTION OF RELATED ART

Short-range radio systems such as well known as Bluetooth have become widely used in wireless communication systems these days. In such a system a unique terminal address to be used on a short-range radio link is assigned to each wireless communication device having a short-range radio capability. In the case of Bluetooth, e.g., a unique terminal address consisting of twelve hexadecimal digits is assigned to each wireless communication device having a Bluetooth capability.

A wireless communication device havin7g a Bluetooth capability includes a built-in non-volatile memory containing a table named "device attribute table", and the device attribute table has an "address" area, a "device name" area, a "device type" area and an "available service" area. A unique terminal address assigned to each wireless communication device is entered in the "address" area before shipment from the manufacturer's facility.

Generally the "device name" area has no entry before shipment and any text type data can be entered afterwards. Those are, e.g. , the name, the phone number or any other subscriber identifications of a purchaser/user of the wireless communication device.

In the "device type" area some text type data with regard to the device type are entered before shipment, e.g., "mobile phone", "PDA" or "PC". And in the "available service" area other text type data with regard to the short-range radio services available with that wireless communication device are entered, e.g., "dial-up networking profile (DUN)", "FAX profile (FAX)", "LAN access profile (LAP)" or "file transfer profile (FTP)".

A wireless communication device having a short-range radio capability shall at first search for and detect a peer device located within the specified short range. This is called an initial search. After a successful detection the wireless communication device is able to communicate with that peer device on the short-range radio link. Hereinafter a wireless communication device searching for a peer device in the above context is referred to as a host device, and the peer device is referred to as a remote device.

In the case of Bluetooth, e.g., an initial search is carried out as follows. To start with a host device having a Bluetooth capability, a display unit and an operating unit transmits a signal to search for remote devices. This is generally triggered by a manually input operation through the operating unit. Each remote device located within the specified short range from the host device replies to the signal to search for with the entries of its device attribute table. The host device, having received a reply from any remote device, investigates the received entry of the "available service" area in the device attribute table, to select one or more remote devices whose available services are in common with the host device. Then the host device shows a list of entries of the "device name" areas of selected one or more remote devices on the display unit.

A selected remote device shown in the above list with its "device name" entry like a user's name or a phone number can easily be identified because those are very familiar identifiers. Another selected remote device whose "device name" entry is none, however, is shown with its "address" entry, a series of twelve hexadecimal digits instead, and thus cannot easily be identified, because this address is an unfamiliar identifier.

Another type of wireless communication devices has been reported in Japanese Patent Application Publication (JP 2003-78966 A) . This type of wireless communication devices is configured to rewrite the "available service" area according to an external rewriting command. This type of wireless communication devices, however, cannot solve the problem that a selected remote device whose "device name entry is none cannot easily be identified, either.

US patent application US 2002/037033 A1 discloses a short range radio unit configured to hold a unique terminal address assigned to the wireless communication unit in a short range radio system and also to hold a device name to use one or more available services defined in the short range radio system and to be searched by a host device using one or more available services or to communicate with the host device.

In a publication "Specification of the Bluetooth system, profiles, version 1.0 B, service discovery application profile" Bluetooth standard, XP002176976 published 1 December 1999, there is disclosed example PDU exchange sequences for enquiry and retrieval of any information pertinent to a particular Bluetooth profile. A service search request is sent and a service response received. A service search response includes an attributes list from the responding device.

Accordingly, an advantage of the present invention is to provide a wireless communication device searching for and detecting remote devices and showing them on the display unit in a manner that a detected remote device can easily be identified even when its "device name" area has no entry.

The present invention consists in a wireless communication device, comprising: a short range radio unit configured to hold a unique terminal address assigned to the wireless communication device in a short range radio system, to use one or more of available services defined therein and to search for or communicate with one or more of remote devices therein, said each remote device being assigned a terminal address, being given a device name and using one or more of said available services; and a transmitter configured to transmit a signal to search for said remote devices with said short range radio unit; characterized by comprising a receiver configured to receive one or more responses to said signal from said remote devices, said each response indicating said terminal address of said each remote device, said available services thereof and said device name thereof; and a display unit configured to show, when one of said remote devices uses one of said available services in common with the wireless communication device, said indicated terminal address of said remote device if said indicated device name is none or said indicated device name otherwise.

In accordance with the above aspect of the present invention, a remote device detected by and shown on a host device can easily be identified because in the "device name" area of the remote device anyhow some entry to facilitate the identification is given and exists.

While illustrative embodiments of the present invention have been described herein, the present invention is not limited to the various preferred embodiments described herein, but includes any and all embodiments having modifications, omissions, combinations (e.g., of aspects across various embodiments), adaptations and/or alterations as would be appreciated by those in the art based on the present disclosure. The limitations in the claims are to be interpreted broadly based the language employed in the claims and not limited to examples described in the present specification or during the prosecution of the application, which examples are to be construed as non-exclusive. For example in the present disclosure, the term "preferably" is non-exclusive and means "preferably, but not limited to." Means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

### BRIEF DESCRIPTION OF THE DRAWINGS

Fig. 1 is a block diagram of a short-range radio system including two wireless communication devices in accordance with an embodiment of the present invention.
Fig. 2 illustrates a structure and exemplified entries of the device attribute table of a wireless communication device playing the role of a remote device whose internal blocks are shown in Fig. 1.
Fig. 3 is a flowchart of a remote device registering the "device name" in the device attribute table shown in Fig. 2.
Fig. 4 is a flowchart of a host device shown in Fig. 1 searching for and detecting a remote device also shown in Fig. 1 and displaying the entries of the device attribute table of the detected remote device in accordance with Fig. 2.
Fig. 5 is a flowchart of a host device shown in Fig. 1 searching for and detecting a remote device also shown in Fig. 1 and displaying the entries of the device attribute table of the detected remote device or associated entries of the phone directory table in accordance with another embodiment of the present invention.
Fig. 6 is a block diagram of a short-range radio system including two wireless communication devices in accordance with a third embodiment of the present invention.
Fig. 7 illustrates a structure and exemplified entries of the device attribute table of a wireless communication device playing the role of a remote device shown in Fig. 6.
Fig. 8 illustrates displaying an appearance of a wireless communication device playing the role of a remote device shown in Fig. 6.
Fig. 9 is a flowchart of a remote device transmitting the entries of the device attribute table and the device specification register shown in Fig. 6.
Fig. 10 is a flowchart of a host device shown in Fig. 6 searching for and detecting a remote device also shown in Fig. 6 and displaying the entries of the device attribute table and the device specification register of the detected remote device.
Fig. 11 is a flowchart of a remote device receiving a signal to search for and highlighting its presence and short-range radio capability in accordance with a fourth embodiment of the present invention.

### DETAILED DESCRIPTION OF THE INVENTION

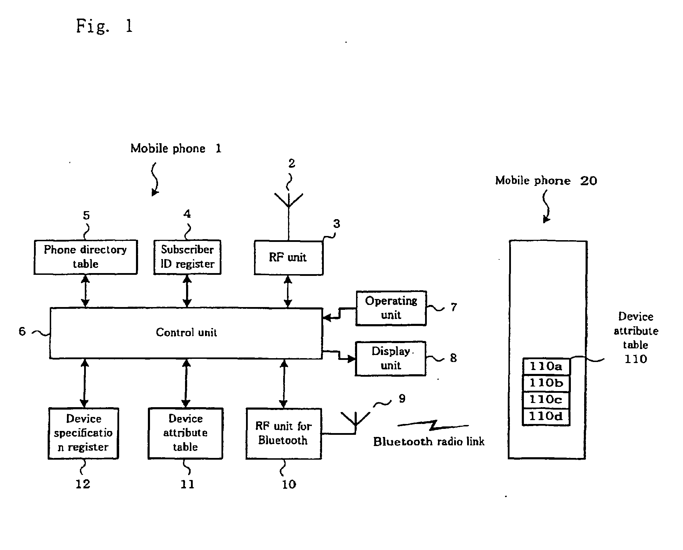

Firstly in the detailed description an embodiment of the present invention will be explained with reference to Figs. 1 to 4. Fig. 1 is a block diagram of a short-range radio system including two wireless communication devices, e.g., mobile phones as an embodiment consistent with the present invention. The one is a mobile phone 1 that plays the role of a remote device, including an antenna 2, an RF unit 3, a subscriber ID register 4, a phone directory table 5, a control unit 6, an operating unit 7, a display unit 8, an antenna for Bluetooth 9, an RF unit for Bluetooth 10, a device attribute table 11, and a device specification register 12. The other is a mobile phone 20 that plays the role of a host device that searches for the mobile phone 1, including a device attribute table 110.

The mobile phone 1 is a subscriber terminal of a wireless, e.g., a cellular type radio communication using the antenna 2 and the RF unit 3. The subscriber ID register 4 is a non-volatile memory. One or more pieces of information to identify the subscriber such as his or her phone number are entered into the subscriber ID register 4 through, e.g., an interface included but inexplicitly shown in the control unit 6, when the mobile phone 1 is purchased. Some types of mobile phones use a SIM (subscriber identification module) card as the subscriber ID register 4.

The phone directory table 5 is a non-volatile memory to register the names, the phone numbers and other pieces of information regarding peer subscribers. A SIM card may be used as the phone directory table 5.

The control unit 6 includes a CPU, a program ROM, a working RAM, i/o interfaces, etc., to monitor and control the entire operation of the mobile phone 1.

The operating unit 7 is an input user interface of the mobile phone 1, and the display unit 8 is an output user interface thereof.

The mobile phone 1 is also a Bluetooth terminal having a capability to communicate with the mobile phone 20 through a Bluetooth radio link using the antenna for Bluetooth 9 and the RF unit for Bluetooth 10. The device attribute table 11 is a non-volatile memory to register the Bluetooth terminal address, etc., assigned to the mobile phone 1. The device specification register 12 contains text type data of the manufacturer's name, the device type or the model number (e.g., "Company A, Mobile phone, XYZ6789") and image type data to illustrate the appearance of the mobile phone 1.

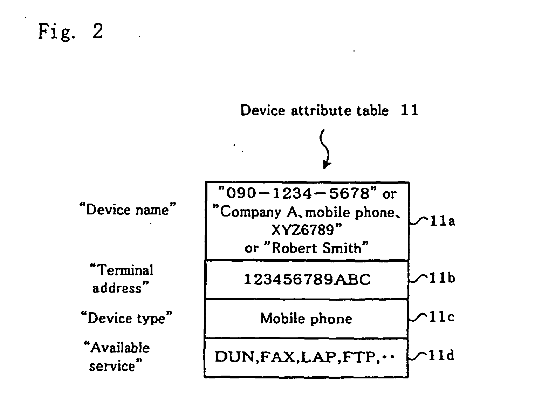

The structure of the device attribute table 11 and its entries will then be explained with reference to Fig. 2. The device attribute table 11 includes a "device name" area 11a, an "address" area 11b, a "device type" area 11c and an "available service" area 11d.

The "device name" area 11a has no entries before shipment from the manufacturer's facility. As will be explained later though, any type of data to identify the mobile phone 1 including its Bluetooth terminal address or its model number, etc., can be entered in the "device name" area 11a.

A unique Bluetooth terminal address assigned to each Bluetooth terminal is entered in the "address" area 11b before shipment. It consists of twelve hexadecimal digits, e.g., "123456789ABC" and is kept unchangeable thereafter

In the "device type" area 11c a device type of the mobile phone 1 selected from "mobile phone", "PDA", "PC", etc., is entered before shipment and is kept unchangeable thereafter.

In the "available service" area 11d a list of Bluetooth services available with the mobile phone 1 is entered before shipment and is kept unchangeable thereafter. They are, e.g.., "dial-up networking profile (DUN) ", "FAX profile (FAX)", "LAN access profile (LAP) " or "file transfer profile (FTP)".

The device attribute table 110 of the mobile phone 20 has a structure and entries similar to those of the device attribute table 11 of the mobile phone 1.

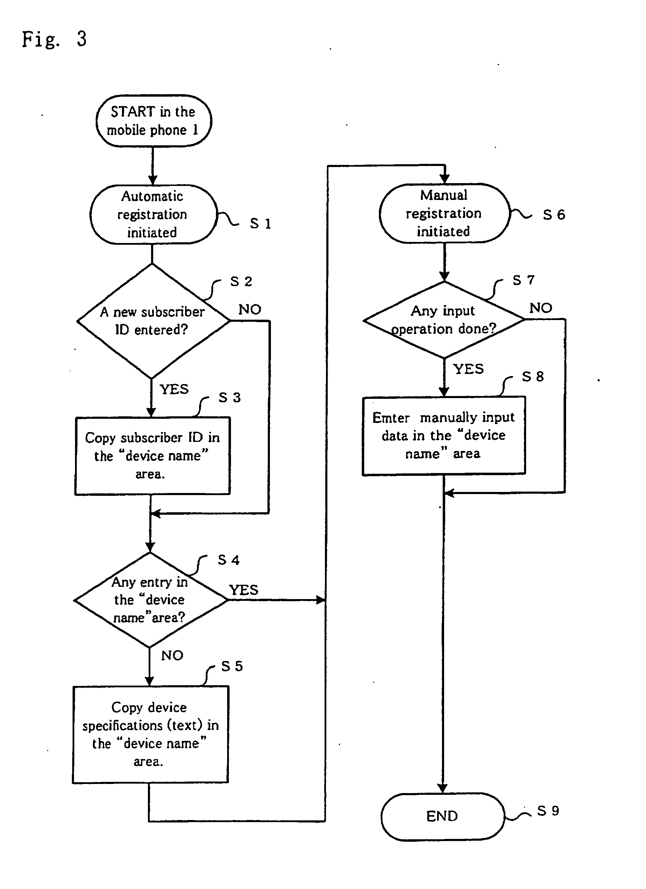

In the next place a series of processing steps to register the "device name" of the mobile phone 1 will be explained with reference to Fig. 3.

To start with the control unit 6 initiates an automatic registration of the device name (step S1) and detects an event that a new piece of information regarding the subscriber ID, e.g., a phone number like "090-1234-5678" is entered in the subscriber ID register 4 (step S2). This event happens when, e.g., the mobile phone 1 is newly or alternately registered or a new SIM card is put into the mobile phone 1.

When it happens and is detected ("YES" at the step S2), the control unit 6 copies the new entry of the subscriber ID register 4 into the "device name" area 11a in the device attribute table 11 (step S3). While such an event is not detected ("No" at the step S2), the control unit 6 keeps the "device name" area 11a as it is.

The control unit 6 subsequently looks into the "device name" area 11a to find out if any entry exists there (step S4). If there is no entry ("NO" at the step S4), the control unit 6 reads out the text type data of the device specification register 12 (e.g., "Company A, Mobile phone, XYZ6789") and then copies them into the "device name" area 11a (step S5) . The mobile phone 1 may, as necessary, have a capability to enlarge the "device name" area 11a to accommodate a great size of the data in the device specification register 12. If any entry exists there ("YES" at the step S4), the control unit 6 keeps the "device name" area 11a as it is.

The control unit 6 then initiates a manual registration of the device name (step S6) and detects an event that any input operation is done through the operating unit 7 (step S7) . If an operation is done and is detected ("YES" at the step S7), the data manually inputted through that operation is entered in the "device name" area 11a (step S8). While such an event is not detected ("No" at the step S2), the control unit 6 keeps the "device name" area 11a as it is. Thus the processing steps of registering the "device name" are completed (step S9).

The steps S4 and S5 may precede the steps S2 and S3, or may even be deleted when the data entered at those steps, giving somewhat additional device specifications, are not used to identify the remote device. In the latter case the device specification register 12 is not required.

After the above processing steps are completed some data to be used to identify the mobile phone 1 is always registered in the "device name" area 11a even when there is no manual input operation.

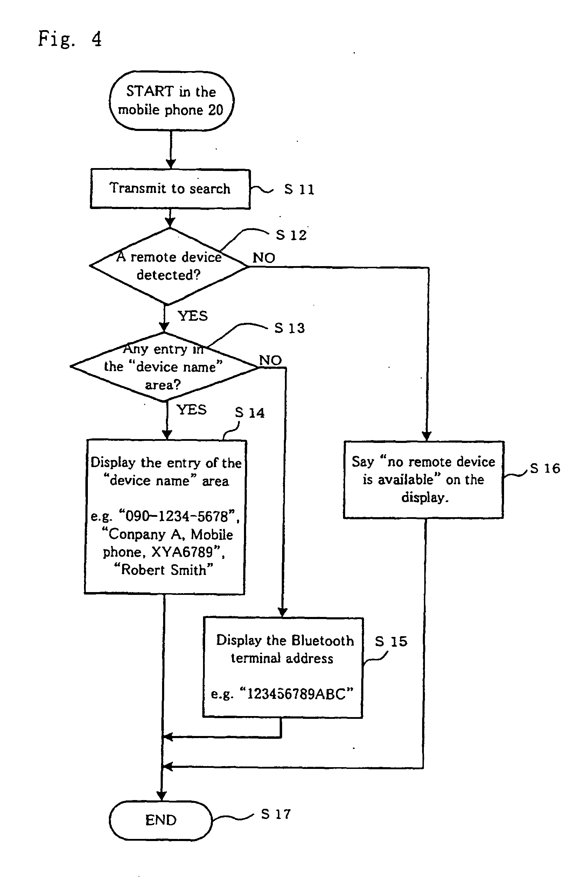

The above registering steps are followed by a series of processing steps of the mobile phone 20 to search for and detect a remote device and to display the entries of the device attribute table 11 of the detected remote device (the mobile phone 1) explained with reference to Fig. 4. To start with the mobile phone 20 transmits a signal to search for any remote device having a Bluetooth capability and existing within a communicable range from the mobile phone 20 through a Bluetooth radio link (step S11) . The control unit 6 of the mobile phone 1 receives that signal via the antenna for Bluetooth 9 and the RF unit for Bluetooth 10. The control unit 6, having recognized that the mobile phone 1 and the mobile phone 20 have one or more available services in common according to the received signal, sends the entries of the device attribute table 11 back to the mobile phone 20 via the RF unit for Bluetooth 9 and the antenna for Bluetooth 10.

The control unit of the mobile phone 20 (inexplicitly shown in Fig. 1) receives the entries of the device attribute table 11 sent from the mobile phone 1 and looks into the "available service" area 11d to compare the available services of the mobile phone 1 and the mobile phone 20. When there is a common available service, the control unit of the mobile phone 20 recognizes that the mobile phone 1 is a communicable remote device through a Bluetooth radio link, and in other words the mobile phone 20 detects the mobile phone 1 (step S12). The control unit of the mobile phone 20 searches for and may detect other remote devices in a similar manner.

When the mobile phone 20 detects no remote devices ("NO" at the step S12), the control unit of the mobile phone 20 says "no remote device is available" on its display unit (inexplicitly shown in Fig. 1) (step S16), and the detecting and displaying steps are completed (step S17).

While, on the other hand, the mobile phone 20 detects the mobile phone 1 ("YES" at the step S12), the control unit of the mobile phone 20 looks into the "device name" area 11a of the mobile phone 1 (step S13). Any entry existing in the "device name" area 11a ("YES" at the step S13) is shown on the display unit of the mobile phone 20 (Step S14). Going back to Fig. 3, e.g. the phone number ("090-1234-5678") copied automatically at the step S3, the device specifications ("Company A, Mobile phone, XYZ6789") copied automatically at the step S5 or the user's name (e.g., "Robert Smith") entered manually at the step S8 can be shown on the display unit of the mobile phone 20. And then the detecting and displaying steps are completed (step S17).

If there is no entry in the "device name" area 11a ("NO" at the step S13), the Bluetooth terminal address entered in the "address" area 11b (e.g., "123456789ABC") is supposed to be shown on the display unit of the mobile phone 20 (step S15). And then the detecting and displaying steps are completed (step S17). The step S15 is however quite rarely followed because the "device name" area 11a anyhow has an entry in most cases as explained with reference to Fig. 3.

An aspect of the present invention in the embodiment explained so far is that when a host device detects a remote device the data entered in the "device name" area of the remote device are shown on the display unit of the host device to facilitate identifying the remote device. This embodiment can be applied to other types of host and remote devices and not limited to mobile phones.

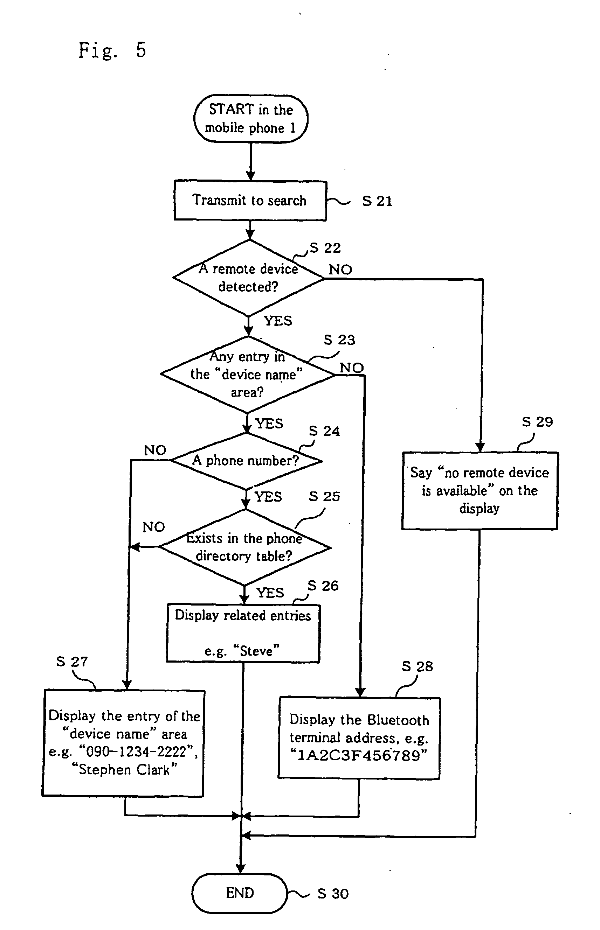

Secondly in the detailed description another embodiment of the present invention will be explained with reference to Fig. 5. The block diagram of a short-range radio system and the structure of a device attribute table embodied here are given in Fig. 1 and Fig. 2 again respectively. In Fig. 1 though it should be noted that the mobile phone 1 plays a role of a host device and the mobile phone 20 plays a role of a remote device, and it is assumed that either a phone number or something else is entered in the "device name" area 110a of the device attribute table 110 of the mobile phone 20.

Fig. 5 is a flowchart to illustrate a series of processing steps of the mobile phone 1 as a host device. The mobile phone 1 transmits a signal to search for any remote device in the same manner as the mobile phone 20 in Fig. 4 (step S21) . The mobile phone 20 having received that signal sends the entries of the device attribute table 110 back to the mobile phone 1.

The control unit 6 of the mobile phone 1 receives the entries of the device attribute table 110 via the antenna for Bluetooth 9 and the RF unit for Bluetooth 10. The control unit 6 then looks into the "available service" area 110d of the device attribute table 110 to compare the available services of the mobile phone 1 and the mobile phone 20. When there is a common available service, the mobile phone 1 detects the mobile phone 20 (step S22) . The control unit 6 searches for and may detect other remote devices in a similar manner.

When the mobile phone 1 detects no remote devices ("NO" at the step S22), the control unit 6 says "no remote device is available" on the display unit 8 (Step S29), and the processing steps are completed (step S30) .

While, on the other hand, the mobile phone 1 detects the mobile phone 20 ("YES" at the step 22), the control unit 6 shows a list of the detected remote devices on the display unit 8. When the mobile phone 20 is selected on the list through an input operation on the operating unit 7, the control unit 6 looks into the "device name" area 110a where either a phone number (e.g., "090-1234-2222") or something else (e.g., a user's name "Stephen Clark") exists (step S23).

If there exists a phone number ("YES" at the step S24), the control unit 6 finds out if that phone number is registered in the phone directory table 5 (step S25). If it is registered ("YES" at the step S25), the control unit 6 reads out entries related to that phone number (e.g., a nickname or an abbreviation like "Steve" in Fig. 5) in the phone directory table 5 and shows the read-out entries on the display unit 8 (step S26), and the processing steps are completed (step S30).

If in the "device name" area 110a there exists something other than the phone number ("NO" at the step S24) or an unregistered phone number ("NO" at the step S25), the control unit 6 shows that entry on the display unit 8 (step S27), and the processing steps are completed (step S30).

Going back to the step 23 if the "device name" area 110a has no entry ("NO" at the step S23), the control unit 6 shows the Bluetooth terminal address entered in the "address" area 110b of the mobile phone 20 (e.g., "1A2C3F456789") on the display unit 8 (Step S28), and the processing steps are completed (step S30). The step S28 is however quite rarely followed because the "device name" area 11a anyhow has an entry inmost cases as previously explained.

Another aspect of the present invention in the embodiment explained with reference to Fig. 5 is that a phone number entered in the "device name" area of a remote device and registered in the phone directory table of a host device can be used to look up and read out related entries in the phone directory table, and that the read-out related entries are shown on the display unit to facilitate identifying the remote device.

In addition to the text type related entries mentioned above, image type ones like animations can be adopted in the phone directory table. This embodiment can be applied to other types of host and remote devices and not limited to mobile phones.

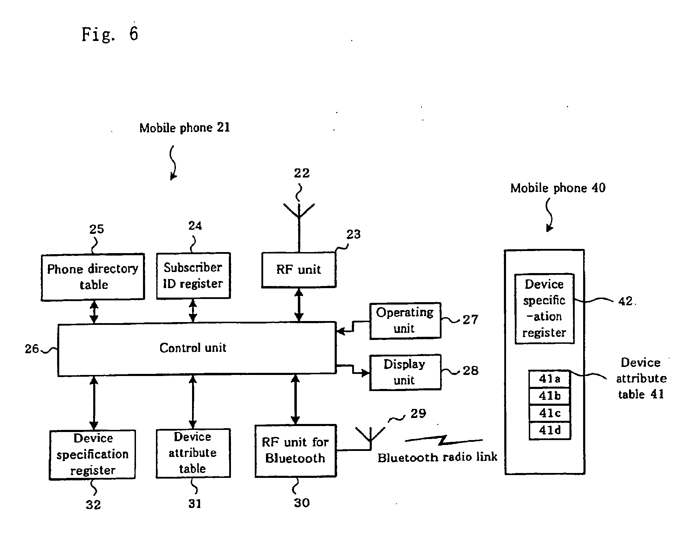

Thirdly in the detailed description a third embodiment of the present invention will be explained with reference to Figs. 6 to 10. Fig. 6 is a block diagram of a short-range radio system including two wireless communication devices, e.g. , mobile phones as an embodiment consistent with the present invention. The one is a mobile phone 21 that plays the role of a host device, including an antenna 22, an RF unit 23, a subscriber ID register 24, a phone directory table 25, a control unit 26, an operating unit 27, a display unit 28, an antenna for Bluetooth 29, an RF unit for Bluetooth 30, a device attribute table 31, and a device specification register 32. The other is a mobile phone 40 that plays the role of a remote device searched for by the mobile phone 21, including a device attribute table 41 and a device specification register 42.

The mobile phone 21 is a subscriber terminal of a wireless, e.g. , a cellular type radio communication using the antenna 22 and the RF unit 23. The subscriber ID register 24 is a non-volatile memory in which one or more pieces of information to identify the subscriber such as his or her phone number is entered. Some types of mobile phones use a SIM card as the subscriber ID register 24.

The phone directory table 25 is a non-volatile memory to register the names, the phone numbers and other pieces of information regarding peer subscribers. A SIM card may be used as the phone directory table 25.

The control unit 26 includes a CPU, a program ROM, a working RAM, i/o interfaces, etc., to monitor and control the entire operation of the mobile phone 21.

The operating unit 27 is an input user interface of the mobile phone 21, and the display unit 28 is an output user interface thereof.

The mobile phone 21 also is a Bluetooth terminal having a capability to communicate with the mobile phone 40 through a Bluetooth radio link using the antenna for Bluetooth 29 and the RF unit for Bluetooth 30. The device attribute table 31 is a non-volatile memory to register the Bluetooth terminal address assigned to the mobile phone 21, etc.. The device specification register 32 contains text type data of the manufacturer's name, the device type or the model number (e.g., "Company A, Mobile phone, XYZ6789") and image type data to illustrate the appearance of the mobile phone 21.

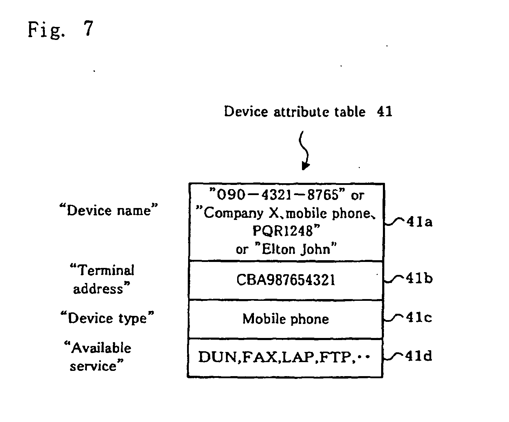

The structure of the device attribute table 41 of the mobile phone 40 and its entries will then be explained with reference to Fig. 7. The device attribute table 41 includes a "device name" area 41a, an "address" area 41b, a "device type" area 41c and an "available service" area 41d. The "device name" registration is done in the same manner as in Fig. 3. The other areas have the same kinds of data as those in Fig. 2.

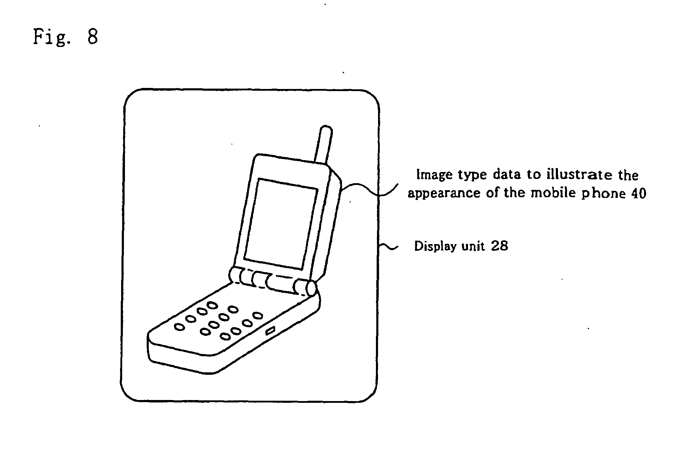

The device specification register 42 contains image type data to illustrate the appearance of the mobile phone 40 as in Fig. 8. , as well as text type device specifications.

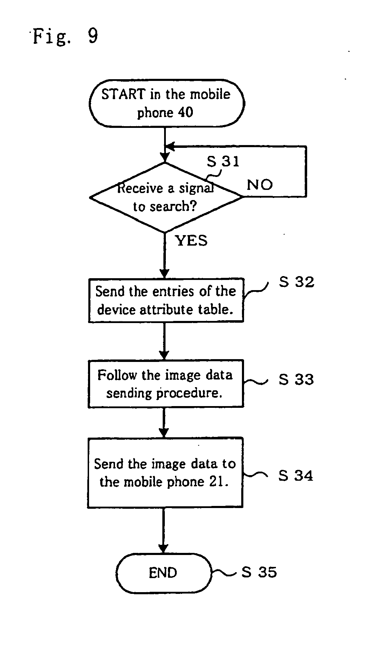

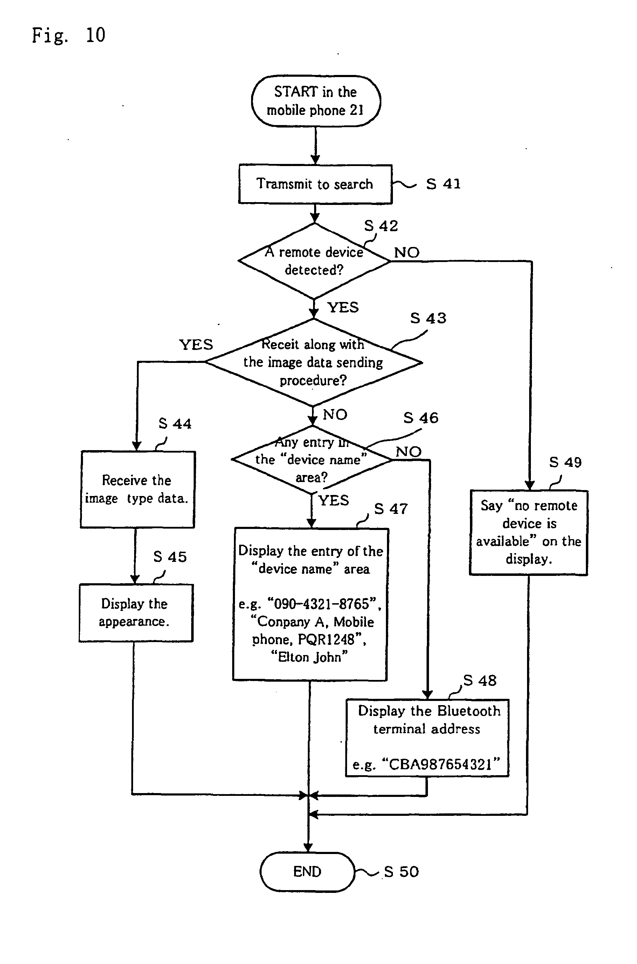

In the next place the processing to send the entries of the device attribute table 41 or the device specification register 42 from the mobile phone 40 to the mobile phone 21 will be explained with reference to Figs. 9 and 10. To start with in Fig. 9, the control unit of the mobile phone 40 (inexplicitly shown in Fig. 6) waits for an incoming signal to search for remote devices (step S31). While no signal is received ("NO" at the step S31), the waiting sequence is continued. When a signal is received ("YES" at the step S31), the mobile phone 40 sends the entries of the device attribute table 41 back to the mobile phone 21 (step S32).

Then the mobile phone 40 follows a procedure to send the image type data contained in the device specification register 42 to the mobile phone 21 (step S33), and resultantly the mobile phone 40 sends the image type data of its appearance to the mobile phone 21 (step S34).

In the next place a series of processing steps of the mobile phone 21 will be explained with reference to Fig. 10. To start with the mobile phone 21 transmits a signal to search for any remote device in the same manner as the mobile phone 20 in Fig. 4 (step S41). The mobile phone 40 having received that signal sends the entries of the device attribute table 41 back to the mobile phone 21.

The control unit 26 of the mobile phone 21 receives the entries of the device attribute table 41 via the antenna for Bluetooth 29 and the RF unit for Bluetooth 30. The control unit 26 then looks into the "available service" area 41d of the device attribute table 41 to compare the available services of the mobile phone 21 and the mobile phone 40. When there is a common available service, the mobile phone 21 detects the mobile phone 40 (step S42) . The control unit 26 searches for and may detect other remote devices in a similar manner.

When the mobile phone 21 detects no remote devices ("NO" at the step S42), the control unit 26 says "no remote device is available" on the display unit 28 (step S49), and the processing steps are completed (step S50).

While, on the other hand, the mobile phone 21 detects the mobile phone 40 ("YES" at the step s42), the control unit 26 shows a list of the detected remote devices on the display unit 28. When the mobile phone 40 is selected on the list through an input operation on the operating unit 27, the control unit 26 investigates if the mobile phone 40 follows the procedure to send the image type data as in the step S33 in Fig. 9 (step S43). If the procedure is followed ("YES" at the step S43), the control unit 26 obtains the image type data to illustrate the appearance of the mobile phone 40 (step S44), and shows that appearance on the display unit 28 (step S45). Resultantly the mobile phone 40 can easily be identified.

While the procedure is not followed ("No" at the step S43), the processing goes on to steps S46 through S48 which are the same as the steps S13 through S15 in Fig. 4, and then the processing steps are completed (step S50).

A third aspect of the present invention in the embodiment explained with reference to Figs. 6 through 10 is that a host device obtains and displays the image type data to illustrate the appearance of a detected remote device which facilitates to identify the remote device in a visual manner. This embodiment can be applied to other types of host and remote devices and not limited to mobile phones.

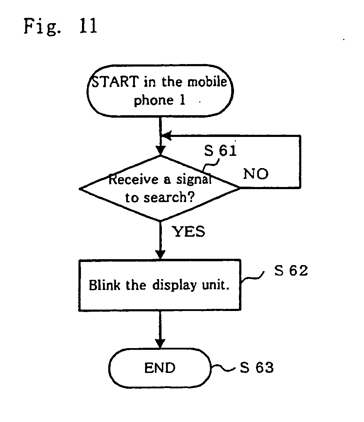

Fourthly in the detailed description a fourth embodiment of the present invention will be explained with reference to Fig. 11. In this embodiment the mobile phone 1 in Fig. 1 is assumed to have an additional feature that the mobile phone 1 as a remote device highlights its presence and Bluetooth capability when it receives a signal from a host device to search for remote devices. The processing steps of the mobile phone 1 having this additional feature will be explained with reference to Fig. 11.

To start with in Fig. 11, the control unit 6 of the mobile phone 1 waits for an incoming signal to search for remote devices (Step S61) . While no signal is received ("NO" at the step S61), the waiting sequence is continued. When a signal is received from a host device having one or more available services in common ("YES" at the step S31), the control unit 6 makes the display unit 8 blink to highlight the presence and capability of the Bluetooth radio of the mobile phone 1 (step S62) .

A fourth aspect of the present invention in the embodiment explained with reference to Fig. 11 is that a remote device can easily be identified by highlighting its presence and capability of the Bluetooth radio. Any visible or audible means other than blinking can be adopted to highlight them. This embodiment can be applied to other types of host and remote devices and not limited to mobile phones.

## Claims

1. A wireless communication device, comprising:
a short range radio unit (1, 20) configured to hold a unique terminal address assigned to the wireless communication device in a short range radio system, to use one or more of available services defined therein and to search for or communicate with one or more of remote devices (1, 20) therein, said each remote device (1, 20) being assigned a terminal address (11b), being given a device name (11a) and using one or more of said available services (11d); and
a transmitter (10) configured to transmit a signal to search for said remote devices with said short range radio unit; **characterized by** comprising
a receiver (10) configured to receive one or more responses to said signal from said remote devices, said each response indicating said terminal address (11b) of said each remote device, said available services (11d) thereof and said device name (11c) thereof; and
a display unit (8) configured to show, when one of said remote devices uses one of said available services in common with the wireless communication device, said indicated terminal address (11b) of said remote device if said indicated device name (11a) is none or said indicated device name (11a) otherwise.

2. A wireless communication device according to claim 1, further comprising a memory unit for containing two pieces of information associated to each other to identify the remote device, and the display unit (8) is configured to show the one of the two pieces of information when the indicated device name is equal to the other thereof.

3. A wireless communication device according to claim 1, wherein the receiver is configured to receive a response including image type data to illustrate the appearance of the remote device from the remote device, and the display unit (8) is configured to display the appearance when the response is received.

4. A wireless communication device according to claim 1, wherein said short range radio system is Bluetooth.

## Patentansprüche

1. Drahtloskommunikationsvorrichtung, umfassend:
eine Kurzbereichsfunkeinheit (1, 20), konfiguriert, um eine einzigartige, der Drahtloskommunikationsvorrichtung in einem Kurzbereichsfunksystem zugewiesene Endgeräteadresse bereitzuhalten, um einen oder mehrere verfügbare, darin definierte Dienste zu benutzen und um nach einer oder mehreren fernen Vorrichtungen (1, 20) darin zu suchen oder mit ihnen zu kommunizieren, wobei jeder fernen Vorrichtung (1, 20) eine Endgeräteadresse (11b) zugewiesen ist, ihr ein Vorrichtungsname (11a) verliehen ist, und sie einen oder mehrere der verfügbaren Dienste (11d) verwendet; und
einen Sender (10), konfiguriert zum Senden eines Signals, um nach den fernen Vorrichtungen mit der Kurzbereichsfunkeinheit zu suchen; **gekennzeichnet durch** das Umfassen:
eines Empfängers (10), der konfiguriert ist zum Empfangen einer oder mehrerer Antworten auf das Signal von den fernen Vorrichtungen, wobei jede dieser Antworten die Endgeräteadresse (11b) der jeweiligen fernen Vorrichtung, die verfügbaren Dienste (11d) davon und den Vorrichtungsnamen (11c) davon angibt; und
eine Anzeigeeinheit (8), die konfiguriert ist, um wenn eine der fernen Vorrichtungen einen der verfügbaren Dienste gemeinsam mit der DrahtloskommunikationsVorrichtung verwendet, die angezeigte Endgeräteadresse (11b) der fernen Vorrichtung zu zeigen, wenn der angegebene Vorrichtungsname (11a) keiner ist, oder andernfalls den angegebenen Vorrichtungsnamen (11a).

2. Drahtloskommunikationsvorrichtung nach Anspruch 1, ferner eine Speichereinheit umfassend, die zwei Informationsteile enthält, die einander zum Identifizieren der fernen Vorrichtung zugeordnet sind, wobei die Anzeigeeinheit (8) konfiguriert ist, um den eine der Informationsteile zu zeigen, wenn der angezeigte Vorrichtungsname gleich ist zu dem anderen davon.

3. Drahtloskommunikationsvorrichtung nach Anspruch 1, wobei der Empfänger konfiguriert ist zum Empfangen einer Bildtypdaten einschließenden Antwort zum Illustrieren des Erscheinens der fernen Vorrichtung von der fernen Vorrichtung, und die Anzeigeeinheit (8) konfiguriert ist zum Anzeigen des Erscheinens, wenn die Antwort empfangen wird.

4. Drahtloskommunikationsvorrichtung nach Anspruch 1, wobei das Kurzbereichsfunksystem Bluetooth ist.

## Revendications

1. Dispositif de communication sans fil, comprenant :
une unité radio courte distance (1, 20) configurée pour contenir une adresse de terminal unique, affectée au dispositif de communication sans fil dans un système radio à courte distance, pour utiliser un ou plusieurs des services disponibles définis et pour rechercher ou communiquer avec un ou plusieurs des dispositifs à distance (1, 20), une adresse de terminal (11b) étant affectée à chaque dispositif à distance (1, 20), recevant un nom de dispositif (11a) et utilisant un ou plusieurs desdits services disponibles (11d); et
un émetteur (10) configuré pour transmettre un signal pour rechercher lesdits dispositifs à distance avec ladite unité radio à courte distance ; **caractérisé par** le fait de comprendre
un récepteur (10) configuré pour recevoir une ou plusieurs réponses audit signal en provenance desdits dispositifs à distance, chaque réponse indiquant ladite adresse de terminal (11b) de chaque dispositif à distance, lesdits services disponibles (11d) et ledit nom de dispositif (11c) de celui-ci ; et
une unité d'affichage (8) configurée pour montrer, lorsque l'un desdits dispositifs à distance utilise l'un desdits services disponibles en commun avec le dispositif de communication sans fil, ladite adresse de terminal indiquée (11b) dudit dispositif à distance si ledit dispositif indiqué (11a) n'a pas de nom ou, sinon, ledit nom de dispositif indiqué (11a).

2. Dispositif de communication sans fil selon la revendication 1, comprenant de plus une unité de mémoire pour contenir deux informations associées entre elles pour identifier le dispositif à distance, et l'unité d'affichage (8) est configurée pour montrer l'une des deux informations lorsque le nom de dispositif indiqué est égal à l'autre.

3. Dispositif de communication sans fil selon la revendication 1, dans lequel le récepteur est configuré pour recevoir une réponse comprenant les données de type d'image pour illustrer l'aspect du dispositif à distance, et l'unité d'affichage (8) est configurée pour afficher l'aspect lorsque la réponse est reçue.

4. Dispositif de communication sans fil selon la revendication 1, dans lequel le système radio à courte distance est le Bluetooth.
